(19) 

Europäisches
Patentamt
European
Patent Office
Office européen
des brevets

(11) **EP 4 380 898 B1**

(12) **EUROPEAN PATENT SPECIFICATION**

(45) Date of publication and mention
of the grant of the patent:
**16.07.2025 Bulletin 2025/29**

(21) Application number: **22758218.6**

(22) Date of filing: **30.07.2022**

(51) International Patent Classification (IPC):
**C01G 53/42** *(2025.01)*   **H01M 4/525** *(2010.01)*
**C01G 53/50** *(2025.01)*   **H01M 10/0525** *(2010.01)*

(52) Cooperative Patent Classification (CPC):
**C01G 53/42; C01G 53/50; H01M 4/525;**
C01P 2002/60; C01P 2002/72; C01P 2002/85;
C01P 2004/50; C01P 2004/61; C01P 2004/84;
H01M 10/0525; Y02E 60/10

(86) International application number:
**PCT/EP2022/071484**

(87) International publication number:
**WO 2023/012080 (09.02.2023 Gazette 2023/06)**

(54) **POSITIVE ELECTRODE ACTIVE MATERIAL FOR A RECHARGEABLE LITHIUM-ION BATTERY**

POSITIVELEKTRODENAKTIVMATERIAL FÜR EINE WIEDERAUFLADBARE
LITHIUM-IONEN-BATTERIEN

MATÉRIAU ACTIF D'ÉLECTRODE POSITIVE POUR BATTERIE RECHARGEABLE AU
LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2021   EP 21189000**
**08.09.2021   US 202163241710 P**

(43) Date of publication of application:
**12.06.2024   Bulletin 2024/24**

(73) Proprietor: **Umicore**
**1000 Brussels (BE)**

(72) Inventors:
• **BLANGERO, Maxime**
**Cheonan Chungcheongnam-do 331-200 (KR)**
• **KARAKULINA, Olesia**
**Cheonan Chungcheongnam-do 331-200 (KR)**

(74) Representative: **Umicore RDI Patent Department**
**Watertorenstraat 33**
**2250 Olen (BE)**

(56) References cited:
**WO-A1-2019/185318       WO-A1-2020/083980**
**US-A1- 2018 212 237**

## Description

## TECHNICAL FIELD AND BACKGROUND

The present invention relates to a positive electrode active material suitable to be used in rechargeable lithium-ion batteries comprising secondary particles having a difference in cobalt and nickel concentration between their center and their edge and including a specific range of crystallite sizes.

There is a need for a Ni-rich NMC cathode material with further improved electrochemical properties to meet the requirements for batteries for use in the automotive and portable electronic device applications. In the framework of the present invention, a Ni-rich NMC compound or material is a LiM'O$_2$ cathode material wherein the molar content of Ni is of at least 75 mol%.

The first cycle efficiency (E$_F$) is one of the key indices for performance evaluation of a secondary battery. The E$_F$ is a value obtained by dividing the initial discharge capacity (DQ1) by the initial charge capacity (CQ1) multiplied by 100 (%). A secondary battery having a high E$_F$ suffers a smaller loss of lithium ions accompanying the initial charging/discharging and is more likely to have a large capacity per volume and weight. Therefore, it is desirable for a secondary battery having as high an E$_F$ as possible

There have already been many efforts to improve the electrochemical properties of positive electrode active material, such as a core shell structure of the positive electrode active material. In this respect, WO2020083980 to Umicore discloses positive electrode active materials having a higher Co and lower Ni content in the shell of the positive electrode active materials with improved electrochemical properties. However, the Ni content of the positive electrode active material of Example 1 (EX1-P1) of WO2020/083980 is only 74 mol% as compared to the total metal content and the Ni content of the positive electrode material of Example 2 (EX2-P1) of WO2020/083980 is 73 mol% as compared to the total metal content. Comparative Example 2 of WO2020/083980 discloses a positive electrode active material (CEX2-P1) having a Ni content of 76 mol% as compared to the total metal content of the positive electrode active material. However, CEX2-P1 is prepared by a metal hydroxide precursor having a Co content in a shell less than 50 mol% as compared to the total metal content in the shell. Therefore, it is expected that the positive electrode active material CEX2-P1 does not have the core-shell structure due to the Co diffusion during a heating step. That is the reason why the CEX2-P1 has inferior electrochemical properties.

Whilst achieving good electrochemical properties, the manufacturing costs can still be improved. An important cost factor is the total concentration of Co in a positive electrode active material.

Consequently, the present invention aims at providing a Ni-rich positive electrode active material (i.e. comprising at least 75 mol% of Ni) having excellent electrochemical properties, such as an initial discharge capacity (DQ1) higher than 205 mAh/g and first cycle efficiency (E$_F$) higher than 90%.

## SUMMARY

This objective is achieved by providing a positive electrode active material suitable for lithium-ion rechargeable batteries, wherein positive electrode active material comprising Li, M', and oxygen, wherein M' comprises:

- Ni in a content x between 75.0 mol% and 95.0 mol%, relative to M',
- Co in a content y between 1.0 mol% and 25.0 mol%, relative to M',
- Mn in a content z between 0.0 mol% and 25.0 mol%, relative to M',
- Al in a content b between 0.0 mol% and 5.0 mol%, relative to M',
- Element other than Li, Ni, Mn, Co, O and Al in a content a between 0.0 mol% and 5.0 mol%, relative to M',
- wherein x, y, z, a, and b contents are measured by ICP,
- wherein x+y+z+a+b is 100.0 mol%,

wherein said positive electrode active material comprises secondary particles consisting of a plurality of primary particles,

wherein the positive electrode active material has a Ni content Ni$_{edge}$ and Co content Co$_{edge}$ as measured by cross-sectional EDS (CS-EDS) at the edge of the secondary particle of the positive electrode active material, wherein Ni and Co contents are expressed as mol% relative to the sum of Ni, Mn, and Co content as measured by CS-EDS at the edge of the secondary particle of the positive electrode active material,

wherein the positive electrode active material has a Ni content Ni$_{center}$ and Co content CO$_{center}$ as measured by CS-EDS at the center of the secondary particle of the positive electrode active material, wherein Ni and Co contents are expressed as mol% relative to the sum of Ni, Mn, and Co content as measured by CS-EDS at the center of the secondary particle of the positive electrode active material,

wherein the ratio Ni$_{edge}$ / Ni$_{center}$ < 0.98,

wherein the ratio $CO_{edge} / CO_{center} > 1.10$,
wherein said secondary particles have an average crystallite size of at least 15 nm and at most 40 nm, as determined by XRD.

A positive electrode active material is defined herein as a material which is electrochemically active in a positive electrode. By active material, it must be understood a material capable to capture and release Li ions when subjected to a voltage change over a predetermined period of time.
The present invention concerns the following embodiments:

## Embodiment 1

In a first aspect, the present invention provides a positive electrode active material suitable for lithium-ion rechargeable batteries, said positive electrode active material comprising Li, M', and oxygen, wherein M' comprises:

- Ni in a content x between 75.0 mol% and 95.0 mol%, relative to M';
- Co in a content y between 1.0 mol% and 25.0 mol%, relative to M';
- Mn in a content z between 0.0 mol% and 25.0 mol%, relative to M',
- Al in a content b between 0.0 mol% and 5.0 mol%, relative to M',
- Elements other than Li, Ni, Mn, Co, O and Al in a content a between 0.0 mol% and 5.0 mol%, relative to M',
- wherein x, y, z, a, and b contents are measured by ICP,
- wherein x+y+z+a+b is 100.0 mol%,

wherein said positive electrode active material comprises secondary particles consisting of a plurality of primary particles,
wherein the positive electrode active material has a Ni content $Ni_{edge}$ and Co content $Co_{edge}$ as measured by cross-sectional EDS (CS-EDS) at the edge of the secondary particle of the positive electrode active material, wherein Ni and Co contents are expressed as mol% relative to the sum of Ni, Mn, and Co content as measured by CS-EDS at the edge of the secondary particle of the positive electrode active material,
wherein the positive electrode active material has a Ni content $Ni_{center}$ and Co content $CO_{center}$ as measured by CS-EDS at the center of the secondary particle of the positive electrode active material, wherein Ni and Co contents are expressed as mol% relative to the sum of Ni, Mn, and Co content as measured by CS-EDS at the center of the secondary particle of the positive electrode active material,
wherein the ratio $Ni_{edge} / Ni_{center} < 0.98$,
wherein the ratio $Co_{edge} / CO_{center} > 1.10$,
wherein said secondary particles have an average crystallite size of at least 15 nm and at most 40 nm, as determined by XRD.

Preferably, the Ni content $x \geq 77.0$ mol% and more preferably $x \geq 80.0$ mol%, relative to M'.
Preferably, the Ni content $x \leq 93.0$ mol% and more preferably $x \leq 91.0$ mol%, relative to M'.
Preferably, the Co content $y > 2$ mol %, more preferably $y \geq 3.0$ mol% and even more preferably $y \geq 5.0$ mol%, relative to M'.
Preferably, the Mn content $z > 1$ mol%, more preferably $\geq 3.0$ mol% and even more preferably $z \geq 4.0$ mol%, relative to M'.
In another embodiment, said Ni in a content x is between 80 mol% and 93 mol% relative to M' and said Co in a content y is between 1.0 mol% and 20.0 mol% relative to M'.
In a preferred embodiment, the positive electrode active material of the present invention comprises a lithium transition metal oxide powder.

## Embodiment 2

In a second embodiment, preferably according to the Embodiment 1, the positive electrode active material of the present invention comprises Al in a content b between 0.1 mol% and 3.0 mol%, relative to M'.
Preferably, the Al content b is $\geq 0.15$ mol%, more preferably $b \geq 0.2$ mol%, and most preferably $b \geq 0.3$ mol%, relative to M'.
Preferably, the Al content b is $\leq 2.0$ mol%, more preferably $b \leq 1.0$ mol%, and most preferably b is $\leq 0.5$ mol%, relative to M'.

### Embodiment 3

In a third embodiment, preferably according to the Embodiment 1 or Embodiment 2, the positive electrode active material of the present invention comprises Ni content $Ni_{edge}$ and Co content $Co_{edge}$ as measured by cross-sectional EDS (CS-EDS) at the edge of the secondary particle of the positive electrode active material, wherein Ni and Co contents are expressed as molar fractions compared to the sum of Ni, Mn, and Co content as measured by CS-EDS at the edge of the secondary particle of the positive electrode active material, wherein the positive electrode active material has a Ni content $Ni_{center}$ and Co content $CO_{center}$ measured by CS-EDS at the center of the secondary particle of the positive electrode active material, wherein Ni and Co contents are expressed as molar fractions compared to the sum of Ni, Mn, and Co content as measured by CS- EDS at the center of the secondary particle of the positive electrode active material,

wherein the ratio $Ni_{edge}$ / $Ni_{center}$ < 0.97,
wherein the ratio $Co_{edge}$ / $CO_{center}$ > 1.15.

In the framework of this invention, the external edge of the secondary particle of the positive electrode active material is the boundary or external limit distinguishing the secondary particle from its external environment. The molar fraction of an element in the center of a secondary particle is determined by EDS measurement of the cross-sectional sample at the center part of the secondary particle. The center part of the secondary particle is the center point of the longest axis in a secondary particle in the cross-section.

A secondary particle taken for the CS-EDS measurement typically has a diameter of D50$\pm$0.5$\mu$m, as determined by particle size distribution analysis.

Preferably, the $Ni_{edge}$ / $Ni_{center}$ $\leq$ 0.96.

Preferably, the $Ni_{edge}$ / $Ni_{center}$ > 0.8, and more preferably $Ni_{edge}$ / $Ni_{center}$ > 0.85.

Preferably, the $Co_{edge}$ / $CO_{center}$ > 1.20, and more preferably $Co_{edge}$ / $CO_{center}$ > 1.30.

Preferably, the $Co_{edge}$ / $CO_{center}$ < 1.8, and more preferably $CO_{edge}$ / $CO_{center}$ < 1.7.

Preferably, the difference between $Ni_{edge}$ and $Ni_{center}$ is at least 5 mol% and a difference between $Co_{edge}$ and $CO_{center}$ is at least 2 mol%, thereby showing Ni and Co concentration gradients from the edge to the center of the secondary particle of the positive electrode active material.

Preferably, the ratio $CO_{edge}/C_{3/4}$ is smaller than the ratio $Co_{edge}/Co_{center}$, wherein $C_{3/4}$ is a Co content expressed as mol% relative to the sum of Ni, Mn, and Co content as measured by CS-EDS at ¾ distance from the edge of the secondary particle to the center of the secondary particle.

Preferably, the ratio $Ni_{edge}/Ni_{3/4}$ is larger than the ratio $Ni_{edge}/Ni_{center}$, wherein $Ni_{3/4}$ is a Ni content expressed as mol% relative to the sum of Ni, Mn, and Co content as measured by CS-EDS at ¾ distance from the edge of the secondary particle to the center of the secondary particle.

Preferably, the positive electrode active material has a cobalt gradient slope (mol%/$\mu$m) wherein $0.2 \leq$ cobalt gradient slope $\leq 1.0$, preferably $0.4 \leq$ cobalt gradient slope $\leq 0.9$ and the cobalt gradient slope is represented by the following formula :

$$Co\ gradient\ slope\ (\mathrm{mol\%/\mu m}) = \frac{Co_{edge} - Co_{center}\ in\ mol\%}{distance\ between\ edge-center\ in\ \mu m}.$$

In the framework of this invention, material having a concentration gradient indicating a material having a difference in Co and Ni concentration between their center and their edge, wherein, said Ni and Co contents are expressed as mol% relative to the sum of Ni, Mn, and Co content as measured by CS- EDS at the center or edge of the secondary particle of the positive electrode active material.

Preferably, a Mn content $Mn_{edge}$ as measured by cross-sectional EDS (CS-EDS) at the edge of the secondary particle of the positive electrode active material, wherein a Mn content is expressed as mol% relative to the sum of Ni, Mn, and Co content as measured by CS-EDS at the edge of the secondary particle of the positive electrode active material, wherein $Mn_{edge}$ is higher than 0 mol%.

### Embodiment 4

In a fourth aspect, preferably according to the Embodiments 1 to 2, the positive electrode active material of the present invention comprises secondary particles that typically have an average crystallite size of at least 15 nm, as determined by XRD.

Preferably, the secondary particles of the positive electrode active material have an average crystallite size of at least 17 nm, more preferably at least 20 nm as determined by XRD.

Preferably, the secondary particles of the positive electrode active material have an average crystallite size of at most 40 nm, more preferably at most 38 nm and most preferably at most 35 nm as determined by XRD.

### Embodiment 5

In a fifth aspect, preferably according to the Embodiments 1 to 4, the positive electrode active material of the present invention comprises the element other than Li, O, Ni, Co, Mn, and Al in a content a is between 0.01 mol% and 5.0 mol%, and preferably a is between 0.1 mol% and 4 mol%, relative to M'.

In another aspect, the element other than Li, O, Ni, Co, Mn, and Al is preferably selected from the group consisting of: B, Ba, Ca, Cr, Fe, Mg, Mo, Nb, S, Si, Sr, Ti, Y, V, W, Zn and Zr, and most preferably is S.

In a further aspect, the positive electrode active material of the present invention preferably comprises S in a content a between 0.6 mol% and 3.0 mol%, most preferably S in a content a between 0.65 mol% and 2.0 mol%, and even more preferably S in a content a between 0.7 mol% and 1.5 mol%, relative to M'.

### Embodiment 6

In a sixth aspect, the present invention provides a battery comprising the positive electrode active material of the present invention.

### Embodiment 7

In a seventh aspect, the present invention provides the use of a battery according to the present invention in a portable computer, a tablet, a mobile phone, an electrically powered vehicle, or an energy storage system.

### BRIEF DESCRIPTION OF THE FIGURES

Figure 1. X-Ray Diffractogram of standard $LaB_6$ material in the range of 40°-70° (x-axis: $2\theta$ in degree, y-axis: intensity as arbitrary unit)

Figure 2. X-Ray Diffractogram of EX1.1 in the range of 42°-47° after separating $K\alpha1$ and Ka2 contribution (x-axis: $2\theta$ in degree, y-axis: intensity as arbitrary unit)

Figure 3. Cross-sectional EDS (CS-EDS) scan of EX1.1 showing concentration gradients of Ni and Co from the edge to center part of the secondary particle (x-axis: distance from the edge in $\mu$m, y-axis: concentration of element in mol% relative to the total molar concentration of Ni, Mn, and Co)

Figure 4. Cross-sectional EDS (CS-EDS) scan of EX1.2 showing concentration gradients of Ni and Co from the edge to center part of the secondary particle (x-axis: distance from the edge in $\mu$m, y-axis: concentration of element in mol% relative to the total molar concentration of Ni, Mn, and Co)

Figure 5. Cross-sectional EDS (CS-EDS) scan of CEX1 showing no concentration gradients of Ni and Co from the edge to center part of the secondary particle (x-axis: distance from the edge in $\mu$m, y-axis: concentration of element in mol% relative to the total molar concentration of Ni, Mn, and Co)

Figure 6. Cross-sectional EDS (CS-EDS) scan of CEX2 showing no concentration gradients of Ni and Co from the edge to center part of the secondary particle (x-axis: distance from the edge in $\mu$m, y-axis: concentration of element in mol% relative to the total molar concentration of Ni, Mn, and Co)

### DETAILED DESCRIPTION

The Ni-rich NMC cathode materials according to the present invention typically have one or more of the following advantages of an improved first cycle efficiency ($E_F$), cycle stability and thermal stability which promote a higher level of safety. This is believed to be achieved by the positive electrode material having a difference in cobalt and nickel concentration between their center and their edge, wherein the Ni content in the edge is less than that of the center and the Co content in the edge is more than that of the center of particle, and also that the secondary particles of the positive electrode material have a specific average crystallite size.

Typically, the positive electrode material of the present invention comprises secondary particle having a median size D50 of at least 2 $\mu$m, and preferably of at least 3 $\mu$m as determined by laser diffraction particle size analysis.

Preferably, said material has a secondary particle median size D50 of at most 16 $\mu$m, and preferably of at most 15 $\mu$m as determined by laser diffraction particle size analysis.

It is clear that further product embodiments according to the invention may be provided by combining features that are covered by the different product embodiments described before.

In a further aspect of the present invention, the positive electrode material of the present invention may be prepared by a method comprising the steps of:

- co-precipitating of first metal sources with a base to obtain a first M'-based intermediate precursor;
- co-precipitating of first metal sources with a base and then adding said first M'-based intermediate precursor seed to obtain a second M'-based intermediate precursor;
- precipitating second metal source with a base onto the second M'-based intermediate precursor to obtain a third M'-based precursor having difference in cobalt and nickel concentration between their center and their edge;
- mixing the obtained third M'-based precursor having a difference in cobalt and nickel concentration between their center and their edge with a lithium source, wherein the thereby obtaining a mixture; and
- heating the mixture in an oxidizing atmosphere, at a temperature of between 650°C and < 750°C to obtain a lithium transition metal oxide powder.

The advantage of using the specific heating temperature in the final step of the method of the present invention is that prevents or limit is crystallite growth of the secondary particles and ensures that the difference in cobalt and nickel concentration between the center and the edge of the precursor is retained in the positive electrode material.

Typically, the first metal sources are transition metal salts, and preferably sulfates of the M' elements Ni, Mn and/or Co.

The base typically used is an alkali compound, such as an alkali hydroxide e.g. sodium hydroxide, and/or ammonia.

The lithium source which may be used comprises LiOH, $Li_2O$ and/or $LiOH.H_2O$.

Second metal source used to prepare the third M' based precursor is typically a transition metal salt, and preferably a sulfate of the M' elements Mn and/or Co.

Typically, the heating step is carried out for a time between 6 and 36 hours.

Optionally, an element containing compound can be added to the positive electrode material. Preferably, said element containing compound is added in the mixing step together with the lithium source to M'-based precursor having a difference in cobalt and nickel concentration between the center and the edge. Alternatively, said element containing compound may be mixed together with the M'-based precursor having a difference in cobalt and nickel concentration between the center and the edge prior to the mixing step.

Preferably, the element of the element compound is an element other than Li, O, Ni, Co, Mn, and Al, and more preferably is selected from the group consisting of: B, Ba, Ca, Cr, Fe, Mg, Mo, Nb, S, Si, Sr, Ti, Y, V, W, Zn and Zr.

In addition, the method described herein above may comprise the following steps of:

- mixing the lithium transition metal oxide powder with a solution comprising aluminum sulfate, wherein the solution comprises S in an amount between 300 ppm to 3000 ppm with respect to the weight of the dried powder to obtain a mixture; and,
- heating the mixture in an oxidizing atmosphere at a temperature between 250°C and less than 500°C so as to obtain a positive electrode active material powder.

Preferably, the positive electrode active material comprises S in an amount of 0.6 mol% to 3.0 mol%, relative to M'.

In the following detailed description, preferred embodiments are described in detail to enable practice of the present invention. Although the present invention is described with reference to these specific preferred embodiments, it will be understood that the present invention is not limited to these preferred embodiments. To the contrary, the present invention includes numerous alternatives, modifications and equivalents as will become apparent from consideration of the following detailed description.

## EXPERIMENTAL TESTS USED IN THE EXAMPLES

The following analysis methods are used in the Examples:

## A) Particle size distribution (PSD) analysis

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. D50 is defined as the particle size at 50% of the cumulative volume % distribution.

**B) Inductively coupled plasma (ICP) analysis**

The positive electrode active material examples as described herein below are measured by the inductively coupled plasma (ICP) method using an Agilent ICP 720-ES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the $2^{nd}$ dilution, where the volumetric flask is filled with internal standard and 10% hydrochloric acid up to the 250 mL mark and then homogenized. Finally, this solution is used for ICP measurement. The Ni, Co, Mn, Al, and Element other than Li, Ni, Mn, Co, O and Al contents (x, y, z, b and a contents, respectively) measured is expressed as mol% of the total of these contents.

**C) Coin Cell testing**

For the preparation of a positive electrode for each example described below, a slurry that contains an example of the positive electrode active material as described herein, a conductor (Super P, Timcal) and a binder (KF#9305, Kureha) - with a formulation of 90:5:5 by weight - in a solvent (NMP, Mitsubishi) is prepared using a high-speed homogenizer. The homogenized slurry is spread on one side of an aluminum foil using a doctor blade coater with a 230 $\mu$m gap. The slurry-coated foil is dried in an oven at 120°C and then pressed using a calendaring tool. Then it is dried again in a vacuum oven to completely remove the remaining solvent in the electrode film. A coin cell is assembled in an argon-filled glovebox. A separator (Celgard 2320) is located between the positive electrode and a piece of lithium foil used as a negative electrode. 1M $LiPF_6$ in EC/DMC (1:2) is used as electrolyte and is dropped between separator and electrodes. Then, the coin cell is completely sealed to prevent leakage of the electrolyte.

Each cell is cycled at 25°C using Toscat-3100 computer-controlled galvanostatic cycling stations (from Toyo). The coin cell testing schedule used to evaluate samples is detailed in Table 1. The schedules use a 1 C current definition of 160 mA/g and comprise the evaluation of rate performance at 0.1 C in the 4.3~3.0 V/Li metal window range. The initial charge capacity (CQ1) and discharge capacity (DQ1) are measured in constant current mode (CC). The first cycle efficiency ($E_F$) is expressed in % as:

$$E_F = \frac{DQ1}{CQ1} \times 100(\%)$$

Table 1. Coin cell testing schedule

| Cycle No | Charge | | | | Discharge | | | |
|---|---|---|---|---|---|---|---|---|
| | C Rate | End current | Rest (min) | V/Li metal (V) | C Rate | End current | Rest (min) | V/Li metal (V) |
| 1 | 0.10 | - | 30 | 4.3 | 0.10 | - | 30 | 3.0 |

**4D) Cross-section energy-dispersive X-ray spectroscopy (CS-EDS)**

**D1) Cross-section preparation**

Cross-sections of the positive electrode active material examples as described herein below are prepared by an ion beam cross-section polisher (CP) instrument JEOL (IB-0920CP). The instrument uses argon gas as beam source.
To prepare the specimen, a small amount of a positive electrode active material powder is mixed with a resin and hardener, then the mixture is heated for 10 minutes on a hot plate. After heating, it is placed into the ion beam instrument for cutting and the settings are adjusted in a standard procedure, with a voltage of 6.5 kV for a 3 hours duration.

**D2) Energy-dispersive X-ray spectroscopy (EDS) analysis**

Using the examples of the positive electrode active materials prepared according to method D1) above, the concentration of Ni, Mn, and Co from the edge to the center of the positive electrode material secondary particles is analyzed by energy-dispersive X-ray spectroscopy (EDS). A secondary particle with a diameter around D50 value as measured by PSD according to Section A) is selected for analysis for each of the examples. The EDS is performed by JEOL JSM 7100F SEM equipment with a 50 mm² X-MaxN EDS sensor from Oxford instruments. An EDS analysis of the positive electrode active material secondary particles provides the quantitative element analysis of the cross-section wherein it is assumed that particles are spherical. A straight line is set from the edge to the center point of the secondary particle and multiples points are set along the line with about 0.4 μm distance between each point. Ni, Mn, and Co concentrations are measured at every point and expressed as a mol% relative to the sum of Ni, Mn, and Co content at each point.

### E) X-ray powder diffraction (XRD)

#### E1) XRD measurement

The X-ray diffraction pattern of the positive electrode active material powder examples as described herein below is collected with a Rigaku X-Ray Diffractometer Ultima 4 using a Cu Ka radiation source (40 kV, 40 mA) emitting at a wavelength of 1.5418 Å. The instrument configuration is set at: a 1° Soller slit (SS), a 10 mm divergent height limiting slit (DHLS), a 1° divergence slit (DS) and a 0.3 mm reception slit (RS). The diameter of the goniometer is 185 mm. For the XRD, diffraction patterns are obtained in the range of 40 - 80° (2θ) with a scan speed of 1° per min and a step-size of 0.02° per scan.

#### E2) Crystallite size calculation

The average crystallite size is determined by the XRD measurement of the positive electrode active material secondary particles. It has a good correlation with an average primary particle size of the positive electrode active material secondary particles. Therefore, the average crystallite size obtained by XRD is often used as a relative parameter to estimate the primary particle size of the secondary particles.

The average crystallite size of the secondary particles of the positive electrode active material examples as described herein below is determined according to the following steps:

**Step 1)** Collecting diffractogram of standard LaB$_6$ material (99.5%, Alfa Aesar, from Fisher Scientific, e.g. : https://www.fishersci.fi/shop/products/lanthanum-boride-99-5-reo/11373888) according to the XRD measurement described in E1.

**Step 2)** Collecting diffractogram of the positive electrode active material according to the XRD measurement described in E1.

**Step 3)** Performing peak integration each for peak LaB$_6$ from 2θ of 48° to 50° and positive electrode active material from 2θ of 43°-46°. The peak integration is conducted in Origin 2018b Version b9.5.5.409 and the baseline is set to end points weighted 10%. From this step, integrated peak areas of LaB$_6$ and the positive electrode active material are obtained and labelled as $A_{LaB_6}$ and $A_{active\ material}$, respectively.

**Step 4)** Performing fitting to separate Kα1 and Ka2 contribution. The fitting is done each to the collected diffractogram of LaB$_6$ (from Step 1) and the positive electrode active material (from Step 2). The fitting can be done in any graphing and analysis software, given that the calculation constraints as describe in the calculation method can be implemented. In this invention, the fitting is assisted by a Solver tool, embedded in the Microsoft Excel software Version 2008. The tool is used to fit peak function based on some preset conditions and objective. The preset conditions including fitting function, constraints, and input value table while objective is a cell containing SUMXMY2 formula. Each preset condition and objective are explained as follow:

- Fitting function

Fitting function is according to the pseudo-Voigt equation, a mix of Gaussian and Lorentzian line shape. The equation is:

$$y = y_o + A\left[m_u \frac{2}{\pi} \frac{w}{4(x-x_c)^2 + w^2} + (1-m_u)\frac{\sqrt{4\ln 2}}{\sqrt{\pi}w} e^{\frac{4\ln 2}{w^2}(x-x_c)^2}\right]$$

with y$_o$=offset, x$_c$=center position of the peak, A=peak area, w=peak width (full width half maximum), and m$_u$=profile shape factor. These five parameters are the variable cells set in the Solver tools.

- Constraints

Some relevant constraints are specified in the calculation following:

Kα1 and Ka2 peak width, wherein $w_{K\alpha1} \leq 0.4°$, $w_{K\alpha2} \leq 0.4°$, and $w_{K\alpha1} = w_{K\alpha2}$; Integrated area ratio between Kα1 and Ka2, wherein $A_{K\alpha2} \leq A_{K\alpha1} * 0.5$; $_{K\alpha1}$ and Ka2 peak position, wherein $Xc_{K\alpha1} = Xc_{K\alpha2} - d$, wherein d can be calculated according to Rachinger equation (Schramm, R. E., Correction and calculations on an X-ray diffraction line profile: A computer program, National Bureau of Standards, 1971, p. 8-9):

$$d = 2\left\{\sin^{-1}\left[\frac{\lambda 2}{\lambda}\sin\theta\right] - \sin^{-1}\left[\frac{\lambda 1}{\lambda}\sin\theta\right]\right\}$$

Wherein, $\lambda$ is wavelengths of Cu Ka = 1.54178 Å, $\lambda 1$ is wavelengths of Cu Kα1 = 1.54051 Å, $\lambda 2$ is wavelengths of Cu Ka2 =1.54433 Å (Nicol, A. W., Physicochemical methods of mineral analysis, Plenum Press, New York, 1975, p. 254), and $\theta$ is the half of the center point of the selected 2θ range in Step 3) (θ for $LaB_6$ is 49°/2=24.5° and θ for the active material is 44.5°/2=22.25°). Therefore, the value of d is 0.129° for $LaB_6$, and 0.116° for the positive electrode active material.

- Input value table

Input value table is a set of initial data used as a starter to improve the fitting and obtain repeatable result. It involves prediction of parameter value based on estimation. Table 2.1 shows the example of input value table for EX1.1, an example of a positive electrode material according to the present invention.

Table 2.1. Example of input value table for EX1.1

| Parameter | Kα1 peak | Ka2 peak |
|---|---|---|
| $y_0$ | 0 | 0 |
| $x_c$ | 44.4 | 44.5 |
| A | 15672.4 | 7836.2 |
| w | 0.2 | 0.2 |
| $m_u$ | 0.5 | 0.5 |

In the calculation, $y_0$ offset is always zero since input data is linearly baselined to 0. The peak positions are organized to place Kα1 on the lower 2θ than Ka2. $m_u$ and w are set as 0.5 and 0.2, respectively. The XRD peak area in the range of 42°-47° is assumed to be a triangle shaped with 1.5° base and maximum intensity of the baselined peak as the triangle height. Kα1 area is 2/3 of the calculated total XRD peak area and Ka2 area is 1/3 of the calculated total XRD peak area.

- Objective

The minimum value of SUMXMY2 is set as the objective in the Solver calculation. This function returns the sum of squares of differences between two array values. In this case, the difference is between real and calculated values. Calculation is terminated when the goodness of fitting $R^2$ reached 99.5% or more. Otherwise, iteration will continue to reach the minimum value of the objective.

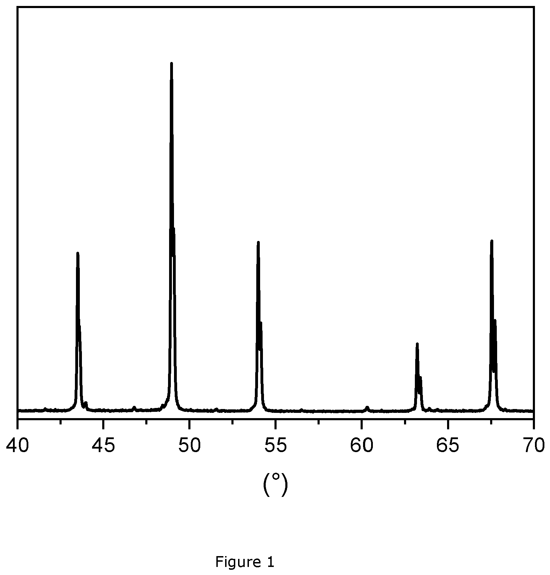

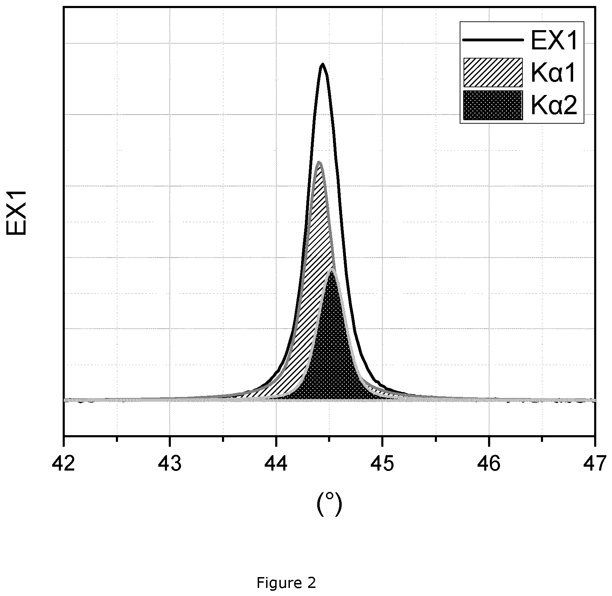

The diffractogram of $LaB_6$ is shown in Figure 1. The example of XRD peak of EX1.1 after fitting process is shown in Figure 2 (x-axis: 2θ, y-axis: intensity). The result of calculated parameter is shown in Table 2.2.

Table 2.2. Calculated parameter after fitting for EX1.1

| Parameter | Kα1 peak | Kα2 peak |
|---|---|---|
| $y_0$ | 0 | 0 |
| $x_c$ | 44.41 | 44.52 |
| A | 14483.4 | 7241.7 |
| w | 0.31 | 0.31 |
| $m_u$ | 0.75 | 0.50 |

From this step, maximum intensity of Kα1 peak each for $LaB_6$ and the positive electrode active material are obtained and labelled as $I_{LaB6}$ and $I_{active\ material}$, respectively.

**Step 5)** Calculating integral breadth according to equation:

$$IB_{LaB6} = \frac{A_{LaB6}}{I_{LaB6}} \times \frac{2}{3}$$

$$IB_{active\ maerial} = \frac{A_{active\ material}}{I_{active\ material}} \times \frac{2}{3}$$

From this step, integral breadths of $LaB_6$ and the positive electrode active material are obtained and labelled as $IB_{LaB6}$ and $IB_{active\ material}$, respectively.

**Step 6)** Correcting IB of positive electrode active material from the instrument broadening according to equation:

$$\beta = \sqrt{(IB_{active\ matetrial})^2 - (IB_{LaB6})^2}$$

Wherein $\beta$ is the corrected $IB_{active\ material}$.

**Step 7)** Calculating the average crystallite size of the secondary particles of the positive electrode active material by using a Scherrer equation: $\tau = \frac{K \cdot \lambda}{\beta \cdot \cos\theta}$ , wherein $\tau$ is the average crystallite size in nm as calculated from XRD, $\lambda$ is the X-Ray wavelength in nm, K is the Scherrer constant which set as 0.9, $\theta$ is $x_c$ of positive electrode active material K$\alpha$1 in radians as obtained from Step 4, and $\beta$ is the corrected $IB_{active\ material}$ obtained from Step 6).

## EXAMPLES

The present invention is further illustrated in the following examples:

## Example 1

EX1.1 is an example of a positive electrode material according to the present invention which was prepared through a solid-state reaction between a lithium source and a transition metal-based source precursor A to prepare a positive electrode material according to the present invention by the following method steps:

1) **Precursor A preparation:** The precipitation process of precursor A was performed in a reactor with a liquid volume of 10 L using an overflow tube and an impeller motor of 400 W. The impeller of 10 cm diameter was stirred at 800 RPM. The reactor had 4 baffles to allow vigorous stirring. A flow of 50 L/h of nitrogen gas was applied above the liquid level to avoid oxidation due to the vigorous stirring. Three solutions containing respectively of nickel sulfate, manganese sulfate, and cobalt sulfate ($NiSO_4$, $MnSO_4$, $CoSO_4$) were prepared each with a total concentration of 110 g/L metal and were then mixed to yield a first solution having a Ni:Mn:Co molar ratio of 87:5:8. A second solution having a Ni:Mn:Co molar ratio of 0:5:95 was prepared from mixing two solutions containing respectively of manganese sulfate and cobalt sulfate ($MnSO_4$ and $CoSO_4$) each with a total concentration of 110 g/L metal. A solution of 400 g/L NaOH and an undiluted ammonia solution of 25% were used. Total metal composition of precursor A was $Ni_{0.85}Mn_{0.05}Co_{0.10}$ which was prepared in process S1 to S3:

a. **S1 first intermediate M' based precursor preparation:** A $Ni_{0.87}Mn_{0.05}Co_{0.08}(OH)_2$ first intermediate precursors were prepared using a typical co-precipitation in a Continuous Stirred Tank Reactor (CSTR), having a specific residence time of 6 hours. At the start the reactor was filled with water and ammonia to get a 15 g/L of ammonia solution inside. The temperature in the reactor was 60°C. After the reactor was filled with the starting solution, the different reagents (first solution, NaOH solution, $NH_3$ solution) were pumped simultaneously in the reactor at different injection points, keeping the ammonia to metal ratio of 1:1 and keeping the pH around 11.7. There should be more than 2 OH⁻ ions for each metal ion in the solution during the precipitation reaction. After 24 hours, the reactor was in steady state and the D50 was between 5 $\mu$m and 20 $\mu$m, and the slurry from the overflow was collected. The precipitated metal hydroxides were washed, filtered under a protective atmosphere to remove the dissolved salts and ammonia. 200 grams of the wet cake was re-pulped in 1 L water and treated with a mechanical pulverization by ball mill. This treatment reduced the D50 size to less than 2 $\mu$m, as determined by PSD analysis.

b. **S2 second intermediate M' based precursor preparation:** A $Ni_{0.87}Mn_{0.05}Co_{0.08}(OH)_2$ second intermediate precursors were prepared using a modified co-precipitation in a Continuous Stirred Tank Reactor (CSTR), having a specific or average residence time of 3 hours. The MeSO$_4$ first solution compositions were used. At the start the reactor was filled with water and ammonia to get a 15 g/L of ammonia solution inside. The temperature in the reactor was 60°C. After the reactor was filled with the starting solution, different reagents (first solution, NaOH solution, NH$_3$ solution) were pumped simultaneously in the reactor at different injection points, keeping the ammonia to metal ratio of 1:1 and keeping the pH around 11.7 with the NaOH solution. Typically, there should be more than 2 OH$^-$ ions for each metal ion in the solution. After 6 hours, 100 grams of first intermediate precursor from S1 were added to the reactor. After at least 6 hours, the particles have grown to around 6-11 $\mu$m. The slurry in the overflow was now collected in a beaker of 3 L and the particles were allowed to settle in the beaker. The beaker was decanted each 30 minutes, and the slurry was put back into the reactor. The dosing of the reagents was stopped when the particles reach a sufficient size (D50 around 11 $\mu$m, as determined by PSD analysis).

c. **S3 third M' based precursor preparation:** The dosing of all reagents (second solution, NaOH solution, NH$_3$ solution) into the CSTR was re-started, and the overflow was collected in a 3 L beaker. Every 30 min the beaker was decanted to remove filtrate and the slurry was put back into the reactor. This practice was continued for 50 minutes. The precipitated metal (oxy-)hydroxides were washed and filtered under protective atmosphere to remove the dissolved salts and ammonia. The wet cake was dried in a furnace at 150°C under nitrogen. The average metal composition of precursor A as determined ICP analysis was Ni:Mn:Co=85:5:10 (in mol%). Important factors like pH, stirring rate, chemical concentration, and temperature were delicately controlled during precipitation process to maintain a constant final product composition.

2) **Mixing:** Precursor A prepared from Step 1) was mixed with LiOH in an industrial blender with Li to metal mol ratio (Li/Me; where Me is the sum of Ni, Mn and Co) of 1.02.

3) **Heating:** The mixture obtained from step 2) was heated at 690°C under an oxygen atmosphere for 12 hours followed by grinding and sieving to obtain the positive electrode material of EX1.1 having a composition of Ni:Mn:Co = 86:4:10 (in mol%), as determined by ICP analysis, and D50 of around 11 $\mu$m, as determined by PSD analysis.

EX1.2 is an example of a positive electrode material according to the present invention which was prepared according to the same method as EX1.1 except that the heating temperature at the heating step 3) was 715°C. EX1.2 had a composition of Ni:Mn:Co = 86:4:10 (in mol%), as determined by ICP analysis, and D50 of around 11 $\mu$m, as determined by PSD analysis.

**Comparative Example 1**

CEX1 is a comparative example of a positive electrode material which was prepared according to the same method as EX1.1 except that the heating temperature used in the heating step 3) was 760°C. CEX1 had a composition of Ni:Mn:Co = 86:4:10 (in mol%), as determined by ICP analysis, and D50 of around 11 $\mu$m, as determined by PSD analysis.

**Comparative Example 2**

CEX2 is a comparative example of a positive electrode material which was obtained through a solid-state reaction between a lithium source and a transition metal-based source precursor B in the following method steps:

1) **Precursor B preparation:** Precursor B was prepared according to the same method as precursor A of EX1.1 except that the first solution used in S1 and S2 had a Ni:Mn:Co molar ratio of 85:5:10, and step 1) c) S3 was omitted. Total metal composition of precursor B was $Ni_{0.8}SMn_{0.05}Co_{0.10}$.

2) **Mixing:** Precursor B prepared from Step 1) was mixed with LiOH in an industrial blender with Li to metal mol ratio (Li/Me) of 1.02.

3) **Heating:** The mixture obtained from step 2) was heated at 715°C under an oxygen atmosphere for 12 hours followed by grinding and sieving to obtain CEX2 having composition of Ni:Mn:Co = 85:5:10 (in mol%), as determined by ICP, and D50 of around 11 $\mu$m, as determined by PSD analysis.

**Examples 2**

EX2 is an example of a positive electrode material according to the present invention which was prepared through following method steps:

1) **Aluminum sulfate solution preparation:** 7.01 grams of $Al_2(SO_4)_3 \cdot 16H_2O$ powder is mixed with 30 grams of deionized water.

2) **Mixing:** 1 kg of EX1.1 was mixed with aluminum sulfate solution prepared in Step 1) to obtain a moist mixture.

3) **Heating:** The mixture obtained from step 2) was heated at 385°C for 8 hours under an oxygen atmosphere followed by grinding and sieving so as to obtain EX2. EX2 had a composition of Ni:Mn:Co = 85:5:10 (in mol%), as determined by ICP, and D50 of around 11 $\mu$m, as determined by PSD analysis. Moreover, EX2 comprises 1.09 mol% S and 0.37 mol% Al, relative to M', as determined by ICP.

**Results**

The results of the experimental tests used on the examples described herein above are as follows:

Table 3. Preparation condition, crystallite size, and electrochemical properties of the examples and comparative examples

| Sample ID | Preparation condition | | XRD | Coin cell | |
|---|---|---|---|---|---|
| | Precursor | Temperature (°C) | Average crystallite size (nm) | DQ1 (mAh/g) | $E_F$ (%) |
| EX1.1 | A | 690 | 22.9 | 207.7 | 91.5 |
| EX1.2 | A | 715 | 28.3 | 210.5 | 90.3 |
| CEX1 | A | 760 | 44.5 | 206.0 | 88.7 |
| CEX2 | B | 715 | 26.1 | 195.9 | 84.7 |
| EX2 | A | 715 | 26.1 | 211.3 | 93.2 |

Table 3 summarizes the ICP values of S and Al, average crystallite sizes and electrochemical properties of EX1.1, EX1.2, CEX1, CEX2, and EX2. It was demonstrated that positive electrode active material EX1.1 and EX1.2 prepared from precursor A and prepared at a firing temperature between 680°C to 750°C showed the highest DQ1 and $E_F$. The benefit in the lower $E_F$ values was also linked with the average crystallite size of the secondary particles being lower than 40 nm, as calculated by XRD method in the Section E). A firing temperature higher than 750°C was found to be disadvantageous since it promoted the growth of the average crystallite size of the secondary particles to values exceeding 40 nm, as shown in Table 3 for CEX1.

EX2 was obtained by mixing EX1.1 with $Al_2(SO_4)_3$ followed by 385°C heating. The treatment further improved DQ1 and $E_F$ over those of EX1.1 showing the presence of both Al and S in the positive electrode active material of EX2 is beneficial for the electrochemical properties.

EX1.2 prepared from precursor A lithiated at 715°C showed higher DQ1 and $E_F$ value than the CEX2 prepared from precursor B at the same firing temperature. From Table 3 it can be concluded that a precursor with concentration gradient characteristic is favorable to prepare positive electrode active material with the improved electrochemical properties.

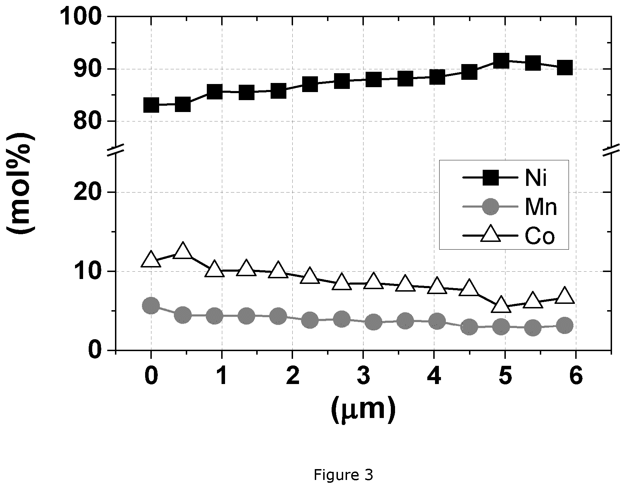

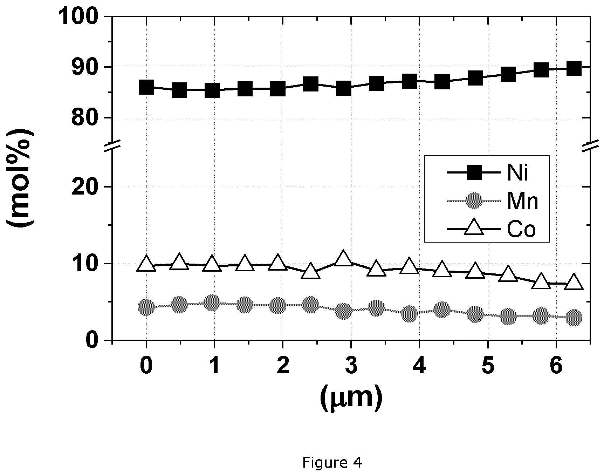

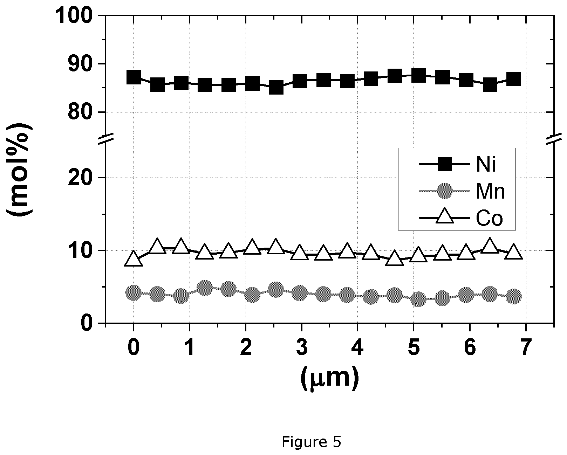

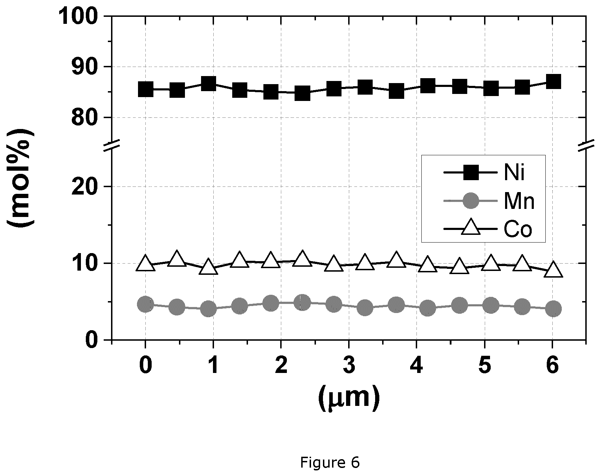

Figure 3 to 6 show the CS-EDS analysis as described in section D) for EX1.1, EX1.2, CEX1, and CEX2, respectively. The analysis is conducted to investigate difference in cobalt and nickel concentration between the center and the edge in the positive electrode active material. The mol% of Ni, Mn, and Co each at the edge and at the center of a secondary particle for each of these examples is shown in Table 4. EX1.1 manufactured at 690°C showed Ni and Co gradients from the edge to the center of the positive electrode active material secondary particle. Ni and Co concentration gradients were observed from the edge (at 0 $\mu$m) to the center of EX1.1 wherein Ni concentration at the edge was lower than the center. Conversely, Co concentration at the edge of EX1.1 was higher than the concentration in the center following the composition of the precursor A. On the other hand, both Ni and Co concentration gradients were not observed in CEX1 which was prepared at a higher lithiation temperature of 760°C indicating that the difference in cobalt and nickel concentration between the center and the edge in precursor disappeared when the firing temperature was higher than 750°C. CEX2 manufactured from a precursor B having no concentration gradient which consequently also showed no Ni and Co concentration gradients.

Table 4. Element concentration as measured by CS-EDX

| ID | Molar fraction at the edge of secondary particle | | | Molar fraction at the center of secondary particle | | | $Ni_{edge} / Ni_{center}$ | $\dfrac{CO_{edge}}{CO_{center}}$ | $\dfrac{CO_{edge}}{Co_{3/4}}$ | $\dfrac{Ni_{edge}}{Ni_{3/4}}$ | Cobalt gradient slope (mol%/$\mu$m)* |
|---|---|---|---|---|---|---|---|---|---|---|---|
| | $Ni_{edge}$ (mol%) | $Mn_{edge}$ (mol%) | $CO_{edge}$ (mol%) | $Ni_{center}$ (mol%) | $Mn_{center}$ (mol%) | $CO_{center}$ (mol%) | | | | | |
| EX1.1 | 83.1 | 5.6 | 11.2 | 90.3 | 2.6 | 7.1 | 0.92 | 1.58 | 1.11 | 0.97 | 0.79 |
| EX1.2 | 86.1 | 4.2 | 9.7 | 89.7 | 2.9 | 7.3 | 0.96 | 1.33 | 0.99 | 1.00 | 0.38 |
| CEX1 | 87.2 | 4.2 | 8.6 | 86.6 | 3.9 | 9.5 | 1.01 | 0.91 | 0.89 | 1.02 | -0.14 |
| CEX2 | 85.6 | 4.7 | 9.7 | 87.1 | 4.1 | 8.9 | 0.98 | 1.09 | 0.95 | 1.00 | 0.14 |

$$*Co\ gradient\ slope = \frac{Co_{edge} - Co_{center}\ in\ mol\%}{distance\ between\ edge-center\ in\ \mu m}$$

The positive electrode active material having an average crystallite size of lower than 40 nm and concentration gradient characteristic, showing by Ni and Co concentration variation in the direction from edge part to the center part of the secondary particle, can achieve the target of this invention, which is to provide a positive electrode active material having initial discharge capacity (DQ1) higher than 205 mAh/g and first cycle efficiency ($E_F$) higher than 90%.

**Claims**

1. A positive electrode active material suitable for lithium-ion rechargeable batteries, said positive electrode active material comprising Li, M', and oxygen, wherein M' comprises:

   - Ni in a content x between 75.0 mol% and 95.0 mol%, relative to M',
   - Co in a content y between 1.0 mol% and 25.0 mol%, relative to M',
   - Mn in a content z between 0.0 mol% and 25.0 mol%, relative to M',
   - Al in a content b between 0.0 mol% and 5.0 mol%, relative to M',
   - Element other than Li, Ni, Mn, Co, O and Al in a content a between 0.0 mol% and 5.0 mol%, relative to M',
   - wherein x, y, z, a and b contents are measured by ICP,
   - wherein x+y+z+a+b is 100.0 mol%,
   wherein said positive electrode active material comprises secondary particles comprising a plurality of primary particles,
   wherein the positive electrode active material has a Ni content $Ni_{edge}$ and Co content $Co_{edge}$ as measured by cross-sectional EDS (CS-EDS) at the edge of the secondary particle of the positive electrode active material, wherein Ni and Co contents are expressed as mol% relative to the sum of Ni, Mn, and Co content as measured by CS-EDS at the edge of the secondary particle of the positive electrode active material,
   wherein the positive electrode active material has a Ni content $Ni_{center}$ and Co content $CO_{center}$ measured by CS-EDS at the center of the secondary particle of the positive electrode active material, wherein Ni and Co contents are expressed as mol% relative to the sum of Ni, Mn, and Co content as measured by CS-EDS at the center of the secondary particle of the positive electrode active material,
   wherein the ratio $Ni_{edge} / Ni_{center} < 0.98$,
   wherein the ratio $Co_{edge} / CO_{center} > 1.10$,
   wherein said secondary particles have an average crystallite size of at least 15 nm and at most 40 nm, as determined by XRD.

2. The positive electrode active material according to claim 1, wherein Al has a content b between 0.1 mol% and 3.0 mol%, relative to M'.

3. The positive electrode active material according to any of the preceding claim, wherein $Ni_{edge} / Ni_{center} < 0.97$ and $CO_{edge} / CO_{center} > 1.15$.

4. The positive electrode active material according to any of the preceding claim, wherein $Ni_{edge} / Ni_{center} \leq 0.96$ and $Co_{edge} / CO_{center} > 1.30$.

5. The positive electrode active material according to any of the preceding claim, wherein the difference between $Ni_{edge}$ and $Ni_{center}$ is at least 5 mol% and the difference between $Co_{edge}$ and $CO_{center}$ is at least 2 mol%, as determined by CS-EDS analysis.

6. The positive electrode active material according to any of the preceding claim, wherein a Mn content $Mn_{edge}$ as measured by cross-sectional EDS (CS-EDS) at the edge of the secondary particle of the positive electrode active material, wherein a Mn content is expressed as mol% relative to the sum of Ni, Mn, and Co content as measured by CS-EDS at the edge of the secondary particle of the positive electrode active material,
   Wherein $Mn_{edge}$ is higher than 0 mol%.

7. The positive electrode active material according to any of the preceding claims, wherein the Ni content $x \geq 77.0$ mol% and preferably $x \geq 80.0$ mol%, relative to M'.

8. The positive electrode active material according to any of the preceding claims, wherein the Ni content $x \leq 93.0$ mol%, relative to M'.

9. The positive electrode active material according to any of the preceding claims, wherein the Co content is $3$ mol% $\leq y \leq 20$ mol%, relative to M'.

10. The positive electrode active material according to any of the preceding claims, wherein the element other than Li, O, Ni, Co, Mn, and Al in content a is between 0.01 mol% and 5.0 mol%, preferably a is between 0.1 mol% and 4 mol%, relative to M'.

11. The positive electrode active material according to any of the preceding claims, wherein the element other than Li, O, Ni, Co, Mn, and Al is selected from the group consisting of: B, Ba, Ca, Cr, Fe, Mg, Mo, Nb, S, Si, Sr, Ti, Y, V, W, Zn and Zr, and preferably is S.

12. The positive electrode active material according to any of the preceding claims, wherein the ratio $Co_{edge}/Co_{3/4}$ is smaller than the ratio $Co_{edge}/Co_{center}$, wherein $Co_{3/4}$ is a Co content expressed as mol% relative to the sum of Ni, Mn, and Co content as measured by CS-EDS at ¾ distance from the edge of the secondary particle to the center of the secondary particle.

13. The positive electrode active material according to any of the preceding claims, wherein the ratio $Ni_{edge}/Ni_{3/4}$ is larger than the ratio $Ni_{edge}/Ni_{center}$, wherein $Ni_{3/4}$ is a Ni content expressed as mol% relative to the sum of Ni, Mn, and Co content as measured by CS-EDS at ¾ distance from the edge of the secondary particle to the center of the secondary particle.

14. The positive electrode active material according to any of the preceding claims, wherein $0.2 \leq$ cobalt gradient slope (mol%/$\mu$m) $\leq 1.0$ and the cobalt gradient slope is represented by the following formula :

$$Co\ gradient\ slope\ (\text{mol}\%/\mu\text{m}) = \frac{Co_{edge} - Co_{center}\ in\ mol\%}{distance\ between\ edge-center\ in\ \mu m}.$$

15. A method for manufacturing positive electrode active material according to any of the preceding claims wherein the method comprises the following consecutive steps:

- co-precipitating of first metal sources with a base to obtain a first M'-based intermediate precursor;
- co-precipitating of first metal sources with a base and then adding said first M'-based intermediate precursor to obtain a second M'-based intermediate precursor;
- precipitating second metal source with a base onto the second M'-based intermediate precursor to obtain a third M'-based precursor having a difference in cobalt and nickel concentration between their center and their edge;
- mixing the obtained third M'-based precursor, having a difference in cobalt and nickel concentration between their center and their edge, with a lithium source to obtain a mixture; and
- heating the mixture in an oxidizing atmosphere, at a temperature of between 650°C and 750°C to obtain a lithium transition metal oxide powder.

16. A battery comprising the positive electrode active material according to any one of claims 1 to 14.

17. Use of a battery according to claim 16 in a portable computer, a tablet, a mobile phone, an electrically powered vehicle, or an energy storage system.

**Patentansprüche**

1. Aktives Material für eine positive Elektrode, das für wiederaufladbare Lithiumionenbatterien geeignet ist, wobei das aktive Material für eine positive Elektrode Li, M' und Sauerstoff umfasst, wobei M' Folgendes umfasst:

- Ni in einem Gehalt x zwischen 75,0 Mol-% und 95,0 Mol-% bezogen auf M',
- Co in einem Gehalt y zwischen 1,0 Mol-% und 25,0 Mol-% bezogen auf M',
- Mn in einem Gehalt z zwischen 0,0 Mol-% und 25,0 Mol-% bezogen auf M',
- Al in einem Gehalt b zwischen 0,0 Mol-% und 5,0 Mol-% bezogen auf M',

- ein von Li, Ni, Mn, Co, 0 und Al verschiedenes Element in einem Gehalt a zwischen 0,0 Mol-% und 5,0 Mol-% bezogen auf M',
- wobei x-, y-, z-, a- und b-Gehalte durch ICP gemessen werden,
- wobei x+y+z+a+b 100,0 Mol-% ergibt,

wobei das aktive Material für eine positive Elektrode Sekundärpartikel umfasst, die eine Vielzahl von Primärpartikeln umfassen,

wobei das aktive Material für eine positive Elektrode einen Ni-Gehalt $Ni_{edge}$ und einen Co-Gehalt $CO_{edge}$ aufweist, die durch Querschnitts-EDS (Cross-Sectional EDS, CS-EDS) am Rand des Sekundärpartikels des aktiven Materials für eine positive Elektrode gemessen werden, wobei Ni- und Co-Gehalte in Mol-% bezogen auf die Summe des Ni-, Mn- und Co-Gehalts ausgedrückt werden, wie durch CS-EDS am Rand des Sekundärpartikels des aktiven Materials für eine positive Elektrode gemessen,

wobei das aktive Material für einen Ni-Gehalt $Ni_{center}$ und einen Co-Gehalt $CO_{center}$ aufweist, die durch CS-EDS im Zentrum des Sekundärpartikels des aktiven Materials für eine positive Elektrode gemessen werden, wobei Ni- und Co-Gehalte in Mol-% bezogen auf die Summe des Ni-, Mn- und Co-Gehalts ausgedrückt werden, wie durch CS-EDS im Zentrum des Sekundärpartikels des aktiven Materials für eine positive Elektrode gemessen,

wobei das Verhältnis $Ni_{edge}/Ni_{center} < 0,98$ ist,

wobei das Verhältnis $Co_{edge}/Co_{center} > 1,10$ ist,

wobei die Sekundärpartikel eine durchschnittliche Kristallitgröße von mindestens 15 nm und höchstens 40 nm aufweisen, wie durch XRD ermittelt.

2. Aktives Material für eine positive Elektrode nach Anspruch 1, wobei Al einen Gehalt b zwischen 0,1 Mol-% und 3,0 Mol-% bezogen auf M' aufweist.

3. Aktives Material für eine positive Elektrode nach einem der vorhergehenden Ansprüche, wobei $Ni_{edge}/Ni_{center} < 0,97$ und $Co_{edge}/Co_{center} > 1,15$ ist.

4. Aktives Material für eine positive Elektrode nach einem der vorhergehenden Ansprüche, wobei $Ni_{edge}/Ni_{center} \leq 0,96$ und $Co_{edge}/CO_{center} > 1,30$ ist.

5. Aktives Material für eine positive Elektrode nach einem der vorhergehenden Ansprüche, wobei die Differenz zwischen $Ni_{edge}$ und $Ni_{center}$ mindestens 5 Mol-% und die Differenz zwischen $CO_{edge}$ und $CO_{center}$ mindestens 2 Mol-% beträgt, wie durch CS-EDS-Analyse ermittelt.

6. Aktives Material für eine positive Elektrode nach einem der vorhergehenden Ansprüche, wobei ein Mn-Gehalt $Mn_{edge}$, gemessen durch Querschnitts-EDS (CS-EDS) am Rand des Sekundärpartikels des aktiven Materials für eine positive Elektrode, in Mol-% ausgedrückt wird, bezogen auf die Summe von Ni-, Mn- und Co-Gehalt, gemessen durch CS-EDS am Rand des Sekundärpartikels des aktiven Materials für eine positive Elektrode, wobei $Mn_{edge}$ größer als 0 Mol-% ist.

7. Aktives Material für eine positive Elektrode nach einem der vorhergehenden Ansprüche, wobei der Ni-Gehalt $x \geq 77,0$ Mol-% und vorzugsweise $x \geq 80,0$ Mol-% bezogen auf M' ist.

8. Aktives Material für eine positive Elektrode nach einem der vorhergehenden Ansprüche, wobei der Ni-Gehalt $x \leq 93,0$ Mol-% bezogen auf M' ist.

9. Aktives Material für eine positive Elektrode nach einem der vorhergehenden Ansprüche, wobei der Co-Gehalt 3 Mol-% $\leq y \leq 20$ Mol-% bezogen auf M' ist.

10. Aktives Material für eine positive Elektrode nach einem der vorhergehenden Ansprüche, wobei das Element im Gehalt a, das von Li, O, Ni, Co, Mn und Al verschieden ist, zwischen 0,01 Mol-% und 5,0 Mol-% liegt, wobei a vorzugsweise zwischen 0,1 Mol-% und 4 Mol-% bezogen auf M' liegt.

11. Aktives Material für eine positive Elektrode nach einem der vorhergehenden Ansprüche, wobei das von Li, O, Ni, Co, Mn und Al verschiedene Element ausgewählt ist aus der Gruppe bestehend aus: B, Ba, Ca, Cr, Fe, Mg, Mo, Nb, S, Si, Sr, Ti, Y, V, W, Zn und Zr und vorzugsweise S ist.

12. Aktives Material für eine positive Elektrode nach einem der vorhergehenden Ansprüche, wobei das Verhältnis $Co_{edge}/Co_{3/4}$ kleiner ist als das Verhältnis $Co_{edge}/Co_{center}$, wobei $Co_{3/4}$ ein Co-Gehalt ist, der in Mol-% bezogen auf die Summe von Ni-, Mn- und Co-Gehalt ausgedrückt wird, gemessen durch CS-EDS bei einem Abstand von dem Rand des Sekundärpartikels zum Zentrum des Sekundärpartikels in %.

13. Aktives Material für eine positive Elektrode nach einem der vorhergehenden Ansprüche, wobei das Verhältnis $Ni_{edge}/Ni_{3/4}$ größer ist als das Verhältnis $Ni_{edge}/Ni_{center}$, wobei $Ni_{3/4}$ ein Ni-Gehalt ist, der in Mol-% bezogen auf die Summe von Ni-, Mn- und Co-Gehalt ausgedrückt wird, gemessen durch CS-EDS bei einem Abstand von dem Rand des Sekundärpartikels zum Zentrum des Sekundärpartikels von ¾.

14. Aktives Material für eine positive Elektrode nach einem der vorhergehenden Ansprüche, wobei 0,2 ≤ die Kobalt-gradientensteigung (Mol-%/μm) ≤ 1,0 ist und die Kobaltgradientensteigung durch die folgende Formel dargestellt wird:

$$Co-Gradientensteigung\ (Mol-\%/\mu m)\ =\ \frac{Co_{edge}-Co_{center}\ in\ Mol-\%}{Abstand\ zwischen\ Rand\ und\ Zentrum\ in\ \mu m}.$$

15. Verfahren zur Herstellung von aktivem Material für eine positive Elektrode nach einem der vorhergehenden Ansprüche, wobei das Verfahren die folgenden aufeinanderfolgenden Schritte umfasst:

- gemeinsames Ausfällen erster Metallquellen mit einer Base, um einen ersten Zwischenvorläufer auf M'-Basis zu erhalten;
- gemeinsames Ausfällen erster Metallquellen mit einer Base und dann Zugeben des ersten Zwischenvorläufers auf M'-Basis, um einen zweiten Zwischenvorläufer auf M'-Basis zu erhalten;
- Ausfällen einer zweiten Metallquelle mit einer Base auf den zweiten Zwischenvorläufer auf M'-Basis, um einen dritten Vorläufer auf M'-Basis zu erhalten, der einen Unterschied in der Kobalt- und Nickelkonzentration zwischen seinem Zentrum und seinem Rand aufweist;
- Mischen des erhaltenen dritten Vorläufers auf M'-Basis, der einen Unterschied in der Kobalt- und Nickelkonzentration zwischen seinem Zentrum und seinem Rand aufweist, mit einer Lithiumquelle, um ein Gemisch zu erhalten; und
- Erwärmen des Gemischs in einer oxidierenden Atmosphäre bei einer Temperatur zwischen 650 °C und 750 °C, um ein Lithium-Übergangsmetalloxidpulver zu erhalten.

16. Batterie, die das aktive Material für eine positive Elektrode nach einem der Ansprüche 1 bis 14 umfasst.

17. Verwendung einer Batterie nach Anspruch 16 in einem tragbaren Computer, einem Tablet, einem Mobiltelefon, einem elektrisch betriebenen Fahrzeug oder einem Energiespeichersystem.


**Revendications**

1. Matériau actif d'électrode positive approprié pour des batteries au lithium-ion rechargeables, ledit matériau actif d'électrode positive comprenant Li, M' et oxygène, dans lequel M' comprend :

- Ni en une teneur x entre 75,0 % molaire et 95,0 % molaire, par rapport à M',
- Co en une teneur y entre 1,0 % molaire et 25,0 % molaire, par rapport à M',
- Mn en une teneur z entre 0,0 % molaire et 25,0 % molaire, par rapport à M',
- Al en une teneur b entre 0,0 % molaire et 5,0 % molaire, par rapport à M',
- Élément, autre que Li, Ni, Mn, Co, O et Al, en une teneur a entre 0,0 % molaire et 5,0 % molaire, par rapport à M',
- dans lequel les teneurs x, y, z, a et b sont mesurées par ICP,
- dans lequel x+y+z+a+b représente 100,0 % molaire,
dans lequel ledit matériau actif d'électrode positive comprend des particules secondaires comprenant une pluralité de particules primaires,
dans lequel le matériau actif d'électrode positive a une teneur en Ni, $Ni_{bord}$, et une teneur en Co, $Co_{bord}$, telles que mesurées par spectroscopie à dispersion d'énergie se section transversale (CS-EDS) au niveau du bord de la particule secondaire du matériau actif d'électrode positive, dans lequel les teneurs en Ni et Co sont exprimées en % molaire par rapport à la somme des teneurs en Ni, Mn et Co telles que mesurées par CS-EDS au niveau du bord de la particule secondaire du matériau actif d'électrode positive, dans lequel le matériau actif d'électrode positive a une teneur en Ni, $Ni_{centre}$, et une teneur en Co, $CO_{centre}$, telles que mesurées par CS-EDS au niveau du centre de la particule secondaire du matériau actif d'électrode positive, dans lequel les teneurs en Ni et Co sont exprimées en % molaire par rapport à la somme des teneurs en Ni, Mn et Co telles que mesurées par CS-EDS au niveau du centre de la particule secondaire du matériau actif d'électrode positive,
dans lequel le rapport $Ni_{bord}$ / $Ni_{centre}$ < 0,98 ;
dans lequel le rapport $Co_{bord}/Co_{centre}$ > 1,10 ;
dans lequel lesdites particules secondaires ont une taille moyenne des cristallites d'au moins 15 nm et d'au plus 40 nm, telle que déterminée par diffraction par rayons X (XRD).

**2.** Matériau actif d'électrode positive selon la revendication 1, dans lequel Al a une teneur b entre 0,1 % molaire et 3,0 % molaire, par rapport à M'.

**3.** Matériau actif d'électrode positive selon l'une quelconque des revendications précédentes, dans lequel $Ni_{bord}$ / $Ni_{centre}$ < 0,97 et $Co_{bord}/ CO_{centre}$ > 1,15.

**4.** Matériau actif d'électrode positive selon l'une quelconque des revendications précédentes, dans lequel $Ni_{bord}$ / $Ni_{centre} \leq$ 0, 96 et $Co_{bord}/ CO_{centre}$ > 1,30.

**5.** Matériau actif d'électrode positive selon l'une quelconque des revendications précédentes, dans lequel la différence entre $Ni_{bord}$ et $Ni_{centre}$ est d'au moins 5 % molaire et la différence entre $Co_{bord}$ et $CO_{centre}$ est d'au moins 2 % molaire, telle que déterminée par analyse CS-EDS.

**6.** Matériau actif d'électrode positive selon l'une quelconque des revendications précédentes, dans lequel une teneur en Mn, $Mn_{bord}$, telle que mesurée par spectroscopie à dispersion d'énergie se section transversale (CS-EDS) au niveau du bord de la particule secondaire du matériau actif d'électrode positive, dans lequel une teneur en Mn est exprimée en % molaire par rapport à la somme des teneurs en Ni, Mn et Co telles que mesurées par CS-EDS au niveau du bord de la particule secondaire du matériau actif d'électrode positive, dans lequel $Mn_{bord}$ est supérieure à 0 % molaire.

**7.** Matériau actif d'électrode positive selon l'une quelconque des revendications précédentes, dans lequel la teneur en Ni x $\geq$ 77,0 % molaire et de préférence x $\geq$ 80,0 % molaire, par rapport à M'.

**8.** Matériau actif d'électrode positive selon l'une quelconque des revendications précédentes, dans lequel la teneur en Ni x $\leq$ 93,0 % molaire, par rapport à M'.

**9.** Matériau actif d'électrode positive selon l'une quelconque des revendications précédentes, dans lequel la teneur en Co est 3 % molaire $\leq$ y $\leq$ 20 % molaire, par rapport à M'.

**10.** Matériau actif d'électrode positive selon l'une quelconque des revendications précédentes, dans lequel l'élément autre que Li, O, Ni, Co, Mn et Al en une teneur a est entre 0,01 % molaire et 5,0 % molaire, de préférence a est entre 0,1 % molaire et 4 % molaire, par rapport à M'.

**11.** Matériau actif d'électrode positive selon l'une quelconque des revendications précédentes, dans lequel l'élément autre que Li, O, Ni, Co, Mn et Al est choisi dans le groupe constitué de : B, Ba, Ca, Cr, Fe, Mg, Mo, Nb, S, Si, Sr, Ti, Y, V, W, Zn et Zr, et est, de préférence S.

**12.** Matériau actif d'électrode positive selon l'une quelconque des revendications précédentes, dans lequel le rapport $Co_{bord}/Co_{3/4}$ est plus petit que le rapport $Co_{bord}/Co_{centre}$, dans lequel $Co_{3/4}$ est une teneur en Co exprimée en % molaire par rapport à la somme des teneurs en Ni, Mn et Co, telles que mesurées par CS-EDS aux ¾ de la distance du bord de la particule secondaire jusqu'au centre de la particule secondaire.

**13.** Matériau actif d'électrode positive selon l'une quelconque des revendications précédentes, dans lequel le rapport $Ni_{bord}/Ni_{3/4}$ est plus grand que le rapport $Ni_{bord}/Ni_{centre}$, dans lequel $Ni_{3/4}$ est une teneur en Ni exprimée en % molaire par rapport à la somme des teneurs en Ni, Mn et Co, telles que mesurées par CS-EDS aux ¾ de la distance du bord de la particule secondaire jusqu'au centre de la particule secondaire.

**14.** Matériau actif d'électrode positive selon l'une quelconque des revendications précédentes, dans lequel 0,2 $\leq$ pente de gradient de cobalt (% molaire/$\mu$m) $\leq$ 1,0 et la pente de gradient de cobalt est représentée par la formule suivante :

$$\textit{Pente de gradient Co (mol \%/\mu m)} \ = \ \frac{Co_{bord} - Co_{centre} \ en \ \% \ molaire}{distance \ du \ bord \ au \ centre \ en \ \mu m}.$$

15. Procédé de fabrication d'un matériau actif d'électrode positive selon l'une quelconque des revendications précédentes, dans lequel le procédé comprend les étapes consécutives suivantes :

- co-précipitation de premières sources métalliques avec une base pour obtenir un premier précurseur intermédiaire à base de M' ;
- co-précipitation de premières sources métalliques avec une base puis ajout dudit premier précurseur intermédiaire à base de M' pour obtenir un deuxième précurseur intermédiaire à base de M' ;
- précipitation de la deuxième source métallique avec une base sur le deuxième précurseur intermédiaire à base de M' pour obtenir un troisième précurseur à base de M' ayant une différence de concentration en cobalt et en nickel entre leur centre et leur bord ;
- mélange du troisième précurseur à base de M' obtenu, ayant une différence de concentration en cobalt et en nickel entre leur centre et leur bord, avec une source de lithium pour obtenir un mélange ; et
- chauffage du mélange dans une atmosphère oxydante, à une température d'entre 650 °C et 750 °C pour obtenir une poudre d'oxyde de métal de transition-lithium.

16. Batterie comprenant le matériau actif d'électrode positive selon l'une quelconque des revendications 1 à 14.

17. Utilisation d'une batterie selon la revendication 16 dans un ordinateur portable, une tablette, un téléphone mobile, un véhicule électrique ou un système de stockage d'énergie.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020083980 A

### Non-patent literature cited in the description

- **SCHRAMM, R. E**. Correction and calculations on an X-ray diffraction line profile: A computer program. *National Bureau of Standards*, 1971, 8-9

- **NICOL, A. W**. Physicochemical methods of mineral analysis. Plenum Press, 1975, 254